# EUROPÄISCHE PATENTANMELDUNG

(11) **EP 1 342 902 A2**
(43) Veröffentlichungstag der Anmeldung: **10.09.2003**
(21) Anmeldenummer: 03004704.7
(22) Anmeldetag: 04.03.2003
(51) Int. Cl.: F02D 41/24

(54) **Verfahren zur Anpassung eines Antriebsmotors an einen hydrodynamischen Drehmomentwandler für ein Kraftfahrzeug**

(30) Priorität: 08.03.2002 DE 10210343
(71) Anmelder: ZF FRIEDRICHSHAFEN AG, 88038 Friedrichshafen (DE)
(72) Erfinder: Höfler, Hans, 88090 Immenstaad (DE); Rebholz, Wolfgang, 88045 Friedrichshafen (DE)
(74) Vertreter: Zietlow, Karl-Peter

(57) **Zusammenfassung**

Im Rahmen des Verfahrens zur Anpassung eines Antriebsmotors an einen hydrodynamischen Wandler für ein Kraftfahrzeug wird die Fahrleistung des Kraftfahrzeugs mit einer vorab einprogrammierten Motorkennlinie gemessen, wobei anhand dieser Messdaten eine geeignete Motorkennlinie bestimmt wird.

## Beschreibung

Die vorliegende Erfindung betrifft ein Verfahren zur Anpassung eines Antriebsmotors an einen hydrodynamischen Drehmomentwandler für ein Kraftfahrzeug gemäß dem Oberbegriff des Patentanspruchs 1.

Bei Fahrzeugen mit hydrodynamischen Drehmomentwandlern ist es wichtig, dass Antriebsmotor und Wandler möglichst genau aufeinander abgestimmt sind, so dass die erzeugte Zugkraft den Bedürfnissen und der Auslegung angepasst ist.

Zu diesem Zweck wird bei der Erstinbetriebnahme des Fahrzeuges beim Hersteller diejenige Motorkennlinie eingestellt, die zu dem eingebauten Wandler am besten passt. Üblicherweise erfolgt dies mittels der Verwendung von elektronisch gesteuerten Getrieben mit gegenseitiger Kommunikation durch eine geeignete Software. Dadurch können bauteilbedingte Leistungstoleranzen von Motor und Drehmomentwandler ausgeglichen werden.

Die vom Fahrzeug erzielten Fahrleistungen sind im wesentlichen von den tatsächlich eingebauten Kennungen der Drehmomentwandler und den entsprechenden Motormomentkennlinien abhängig. Da diese in der Serienanwendung bestimmte Toleranzbänder aufweisen, sind, in Abhängigkeit von den Kombinationen zwischen Wandlerkennlinien und Motormomentkennlinien, erhebliche Streuungen der erreichten Fahrleistungen der Fahrzeuge möglich. Dies wirkt sich insbesondere bei Baumaschinen, Landmaschinen oder geländegängigen Fahrzeugen aus.

Der vorliegenden Erfindung liegt die Aufgabe zugrunde, ein Verfahren zur Anpassung eines Antriebsmotors an einen hydrodynamischen Wandler anzugeben, welches die Nachteile des Standes der Technik vermeidet und eine optimale Kombination zwischen Motor und Wandler ermöglicht.

Diese Aufgabe wird durch die Merkmale des Patentanspruchs 1 gelöst. Weitere Vorteile und Varianten gehen aus den Unteransprüchen hervor.

Demnach wird vorgeschlagen, bei der Erstinbetriebnahme jedes Fahrzeuges am Ende der Montagelinie die Fahrleistung mit einer vorab einprogrammierten Motorkennlinie zu messen und anschließend die geeignete Motorkennlinie zu bestimmen.

Hierbei ist im Rahmen einer ersten vorteilhaften Variante der vorliegenden Erfindung vorgesehen, dass die elektronische Steuerung des Getriebes oder des Motors mit diesen Messergebnissen eine geeignete Motorkennlinie erzeugt, die dann die vorab einprogrammierte Motorkennlinie im Speicher der Motorsteuerung ersetzt.

Im Rahmen einer Variante ist vorgesehen, mehrere Kennlinien in den Speicher abzulegen, und bei der Erstinbetriebnahme nach der Durchführung der Messungen die geeignete Linie zu aktivieren, welche zu dem eingesetzten Drehmomentwandler am besten passt.

Für die Messung der Fahrleistung wird vorgeschlagen, die Motordrehzahl im Festbremspunkt zu messen und anschließend abzulegen. Weitere Daten werden erfindungsgemäß aus einer Beschleunigungsmessung vom Stillstand bis zum Erreichen der maximalen Fahrgeschwindigkeit gewonnen.

Zusätzlich oder alternativ zu der oben beschriebenen Vorgehensweise können die Zugkräfte des Fahrzeuges an einem Kraftmessstand bei verschiedenen Drehzahlen gemessen und abgelegt werden.

Im Rahmen einer besonders vorteilhaften Variante des erfindungsgemäßen Verfahrens kann ein - beispielsweise lebensdauerbedingter - Leistungsabfall ausgeglichen werden. Zu diesem Zweck wird bei Wartung oder Fahrleistungsabfall eine erneuerte Einstellung der Motorkennlinie vorgenommen. Dies kann auch adaptiv während des Betriebes erfolgen, wobei hierfür eine Erkennung des Fahrzustandes und des Fahrprofils erforderlich ist.

## Patentansprüche

1. Verfahren zur Anpassung eines Antriebsmotors an einen hydrodynamischen Wandler für ein Kraftfahrzeug, **dadurch gekennzeichnet, dass** die Fahrleistung des Kraftfahrzeugs mit einer vorab einprogrammierten Motorkennlinie gemessen wird und dass anhand dieser Messdaten eine geeignete Motorkennlinie bestimmt wird.

2. Verfahren nach Anspruch 1, **dadurch gekennzeichnet, dass** anhand der Messdaten von der elektronischen Steuerung des Getriebes oder des Motors eine geeignete Motorkennlinie erzeugt wird, welche die vorab einprogrammierte Motorkennlinie ersetzt.

3. Verfahren nach Anspruch 1, **dadurch gekennzeichnet, dass** mehrere Motorkennlinien im Speicher der Motorsteuerung abgelegt werden und dass anhand der Messdaten die geeignete Motorkennlinie aktiviert wird, die die vorab einprogrammierte Motorkennlinie ersetzt.

4. Verfahren nach einem der vorangehenden Ansprüche, **dadurch gekennzeichnet, dass** für die Messung der Fahrleistung die Motordrehzahl im Festbremspunkt gemessen wird, wobei weitere Daten aus einer Beschleunigungsmessung vom Stillstand bis zum Erreichen der maximalen Fahrgeschwindigkeit gewonnen werden.

5. Verfahren nach einem der vorangehenden Ansprüche, **dadurch gekennzeichnet , dass** zur Bestimmung der Motorkennlinie alternativ oder zusätzlich die Zugkräfte des Fahrzeuges an einem Kraftmessstand bei verschiedenen Drehzahlen gemessen werden.

6. Verfahren nach einem der vorangehenden Ansprüche, **dadurch gekennzeichnet, dass** es bei der Erstinbetriebnahme des Fahrzeuges und/oder bei Wartungsarbeiten durchgeführt wird.

7. Verfahren nach Anspruch 6, **dadurch gekennzeichnet, dass** es adaptiv während des Betriebes durchführbar ist.
